(19) Europäisches Patentamt
European Patent Office
Office européen des brevets

(11) **EP 3 992 688 B1**

(12) # EUROPÄISCHE PATENTSCHRIFT

(45) Veröffentlichungstag und Bekanntmachung des Hinweises auf die Patenterteilung:
**24.07.2024  Patentblatt 2024/30**

(51) Internationale Patentklassifikation (IPC):
**G02B 21/00** (2006.01)    **G02B 21/18** (2006.01)
**G02B 21/36** (2006.01)

(21) Anmeldenummer: **21204994.4**

(22) Anmeldetag: **27.10.2021**

(52) Gemeinsame Patentklassifikation (CPC):
**G02B 21/008; G02B 21/0072; G02B 21/18; G02B 21/367**

(54) **VORRICHTUNG UND VERFAHREN ZUR ERFASSUNG VON BILDDATEN**

DEVICE AND METHOD FOR DETECTING IMAGE DATA

DISPOSITIF ET PROCÉDÉ D'ACQUISITION DE DONNÉES D'IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.11.2020  DE 102020213713**

(43) Veröffentlichungstag der Anmeldung:
**04.05.2022  Patentblatt 2022/18**

(73) Patentinhaber: **Carl Zeiss Microscopy GmbH 07745 Jena (DE)**

(72) Erfinder:
• **ANHUT, Tiemo**
  **07745 Jena (DE)**
• **SCHWEDT, Daniel**
  **07745 Jena (DE)**

(74) Vertreter: **Meyer, Jork**
**Carl Zeiss AG**
**Patentabteilung**
**Carl-Zeiss-Promenade 10**
**07745 Jena (DE)**

(56) Entgegenhaltungen:
EP-A1- 3 721 279        EP-A1- 3 811 851
EP-B1- 3 721 279        CN-A- 110 584 593
US-A1- 2018 203 217     US-A1- 2019 113 731

• CONG LIN ET AL: "Rapid whole brain imaging of neural activity in freely behaving larval zebrafish (Danio rerio)", AUTHOR RESPONSE: RAPID WHOLE BRAIN IMAGING OF NEURAL ACTIVITY IN FREELY BEHAVING LARVAL ZEBRAFISH (DANIO RERIO), 20 September 2017 (2017-09-20), XP055895659, Retrieved from the Internet <URL:https://www.ncbi.nlm.nih.gov/pmc/articles/PMC5644961/pdf/elife-28158.pdf>

**EP 3 992 688 B1**

## Beschreibung

Die Erfindung betrifft eine Vorrichtung und ein Verfahren zur Erfassung von Bilddaten.

Die schnelle Erfassung dreidimensionaler Probenvolumina rückt mehr und mehr in den Fokus der modernen Mikroskopie. Eine wesentliche Anwendung stellt hierbei die Messung neuronaler Signale in Netzwerken von Nervenzellen dar. Diese Netzwerke breiten sich im Hirn über mehrere hundert oder tausend Mikrometer aus. Um nun wesentliche Leistungen des Hirns verstehen zu können, sollen Reaktionen dieser Netzwerke oder großer Teile derselben mit hoher zeitlicher Auflösung möglichst vollständig erfasst werden.

Da es hierbei nicht nur um das Verständnis der morphologischen Struktur, sondern um funktionale Prozesse geht, werden diese Verfahren auch unter dem Stichwort der funktionalen Bildgebung zusammengefasst.

Auf dem Gebiet der Mikroskopie sind eine Reihe unterschiedlicher Methoden bekannt, mit denen sich der funktionalen Bildgebung genähert werden kann. Methodische Ansätze wie zum Beispiel eine schnelle 2D-Aufnahme, die dann axial gerastert wird, sind in der Regel für das oben umrissene Anwendungsgebiet zu langsam. Rein auf eine algorithmische Auswertung orientierte Methoden (computational imaging) sind in der Regel anfällig für Artefakte.

Konfokale, scannende Verfahren mit einem geringen Grad an Parallelisierung haben den Nachteil, dass sie relativ langsam und zeitsequenziell arbeiten. Eine Erhöhung der Geschwindigkeit geht oft einher mit einer Erhöhung der Lichtleistung in der Probe, wobei eine höhere Lichtleistung verwendete fluoreszente Marker sättigen und die Probe schädigen kann. Eine weitere punktscannende Methode stellt die Mehrphotonenmikroskopie dar. Auch hierbei ist der Grad der Parallelisierung gering.

Eine höhere Parallelisierung ist beispielsweise mittels der Spinning-Disk-Mikroskopie möglich. Dabei wird eine größere Anzahl von Abtaststrahlen gleichzeitig über eine Probe geführt und die jeweils bewirkten Detektionsstrahlungen durch sogenannte Pinholes erfasst, die in einer sich drehenden Scheibe (Disk) vorhanden sind. Diese konfokale Methode erlaubt beispielsweise, einige hundert Fokalvolumina parallel zu scannen.

Ebenfalls einen höheren Grad an Parallelisierung weisen Verfahren und Anordnungen auf, welche von einer sogenannten Lichtblattbeleuchtung Gebrauch machen. Dazu wird ein statisches oder dynamisches Lichtblatt erzeugt und in die Probe gerichtet. Aufgrund der sehr geringen Dicke des Lichtblatts quer zu dessen flächiger Ausdehnung (Lichtblattdicke) wird nur in einer aktuell beleuchteten Ebene Detektionsstrahlung, insbesondere Fluoreszenzstrahlung, bewirkt.

Alternativ zu einer selektiven Beleuchtung von Bereichen der Probe wird bei Anwendung der Lichtfeld-Mikroskopie eine Weitfeldbeleuchtung verwendet. Eine Detektion nach der LichtfeldTechnologie erlaubt eine schnelle Datenerfassung innerhalb, aus Sicht der Mikroskopie, größerer Volumina, sowie eine gute Tiefenauflösung. Die Nachteile sind in der fehlenden Möglichkeit des optischen Schneidens und einer starken Hintergrundstrahlung zu sehen.

Die Erfassung eines größeren Volumens bei gleichzeitig verbesserter Auflösung kann durch die Verwendung eines Mikrolinsenarrays vor dem Detektor erzielt werden. In der Publikation Cong et al. (Cong, L. et al. 2017; eLife, 6:e28158) ist dazu ein Mikrolinsenarray vorgeschlagen, in dem Mikrolinsen unterschiedlicher Fokallänge angeordnet sind. Nachteilig ist allerdings, dass von jeder der Mikrolinsengruppen nur ein Teil der Apertur genutzt wird.

Der Erfindung liegt die Aufgabe zu Grunde eine Möglichkeit vorzuschlagen, mittels der dreidimensionale Bereiche einer Probe mit einer hohen zeitlichen und zugleich hohen räumlichen Auflösung abgebildet werden können.

Die Aufgabe wird mit einer Vorrichtung zur Erfassung von Bilddaten gelöst. Die Vorrichtung umfasst einen Detektionsstrahlengang, entlang dem Detektionsstrahlung mindestens eines Mikroskops geführt wird beziehungsweise führbar ist. Die Vorrichtung kann beispielsweise an einem Zwischenbild oder einer anderen geeigneten Schnittstelle Detektionsstrahlung des Mikroskops übernehmen. Weiterhin ist ein Mittel zur Aufteilung der Detektionsstrahlung auf einen ersten Detektionspfad und einen zweiten Detektionspfad im Detektionsstrahlengang vorhanden. In dem ersten Detektionspfad ist ein erster Detektor und in dem zweiten Detektionspfad ein zweiter Detektor angeordnet, wobei mindestens einem der Detektoren ein Mikrolinsenarray, insbesondere in dem betreffenden ersten Detektionspfad beziehungsweise zweiten Detektionspfad, vorgeordnet ist. Das mindestens eine Mikrolinsenarray ist in einer Pupillenebene oder in einer Bildebene angeordnet. Dabei weist der erste Detektor eine erste räumliche Auflösung (Bildauflösung) und der zweite Detektor eine zweite räumliche Auflösung auf. Die erste räumliche Auflösung ist höher als die zweite räumliche Auflösung. Außerdem, oder alternativ dazu, weist der erste Detektor eine erste zeitliche Auflösung (Detektionsrate) und der zweite Detektor eine zweite zeitliche Auflösung auf, wobei die erste zeitliche Auflösung geringer als die zweite zeitliche Auflösung ist.

Gekennzeichnet ist die Vorrichtung dadurch, dass eine Auswerteeinheit, beispielsweise ein Rechner, zur Auswertung der erfassten Bilddaten der ersten und zweiten Detektoren vorhanden ist. Die Auswerteeinheit ist derart konfiguriert, dass die Auswertung der Bilddaten beider Detektoren zu einem dreidimensional aufgelösten resultierenden Bild verrechnet werden.

Unter einem Bild, insbesondere einem dreidimensional aufgelösten resultierenden Bild, wird insbesondere ein Datensatz verstanden, der eine (digitale) dreidimensionale Repräsentation der Probe darstellt. Dieser Datensatz kann beispielsweise als zwei- oder dreidimensionale Grafik visualisiert werden.

Kern der Erfindung ist die Bereitstellung von Bilddaten unterschiedlicher räumlicher und/oder zeitlicher Auflösungen sowie deren Zusammenführung zu sowohl zeitlich als auch räumlich hochaufgelösten resultierenden Bildern. Dabei werden je Detektionselement (Pixel) der Detektoren Informationen zum Ort, vorteilhaft auch jeweilige Winkelinformationen der erfassten Lichtstrahlen, erfasst und ausgewertet. Die erfindungsgemäße Erkenntnis ist, dass durch eine geschickte Kombination zweier Detektoren und Verrechnung deren erfasster Bilddaten sowohl eine sehr gute dreidimensionale Auflösung erreicht werden kann, die z. B. die Anforderungen hinsichtlich der räumlichen Auflösung für die Nutzung in der Neurobiologie erfüllt, und andererseits eine Volumendetektionsrate von z. B. 100 vollen Volumina pro Sekunde und darüber hinaus ermöglicht ist.

Die ersten und zweiten Detektoren der Vorrichtung sind beispielsweise zweidimensionale Detektoren, die eine Anzahl rasterförmig angeordneter Detektorelemente aufweisen. Da eine sehr hohe Sensitivität (geringes Rauschen) erforderlich ist, kommen als Detektoren beispielsweise EMCCD oder sCMOS-Sensoren infrage. Zukünftig werden auch SPAD-Detektoren, beispielsweise SPAD-Arrays wie zum Beispiel CMOS-SPAD-Array-Sensoren an Bedeutung gewinnen.

Die technischen Unterschiede von erstem und zweitem Detektor sind vorteilhaft so gewählt, dass die jeweiligen räumlichen Auflösungen und zeitlichen Auflösungen voneinander so stark differieren, dass sich beide Aufnahmemodi zwar hinreichend voneinander unterscheiden, aber mit angemessenem Aufwand miteinander kombiniert werden können. Dies dient dazu, die jeweiligen Vorteile der Modi auch tatsächlich zu erlangen und durch deren geschickter Kombination die Bildqualitäten im Sinne der Erfindung zu erhalten und nutzen zu können.

Für die nachfolgenden Erläuterungen wird angenommen, dass der erste Detektor eine höhere räumliche, aber geringere zeitliche Auflösung als der zweite Detektor aufweist, falls nicht ausdrücklich etwas anderes beschrieben ist. So kann zum Beispiel die erste räumliche Auflösung mindestens um einen Faktor 1,5 höher als die zweite räumliche Auflösung und die erste zeitliche Auflösung mindestens um einen Faktor 2 niedriger als die zweite zeitliche Auflösung sein.

Um eine Verrechnung der mit den jeweiligen Detektoren erfassten Bilddaten zu unterstützen, sind der erste Detektor (fortan auch als "Slowcam" bezeichnet) und der zweite Detektor (auch: "Fastcam") derart zueinander justiert, dass eine Zuordnung der Bilddaten, beispielsweise von Einzelbildern, aufeinander möglich ist. Slowcam und Fastcam werden vorteilhaft so aufeinander kalibriert, dass die jeweils erfassten Bilddaten einander überlagert und/oder miteinander verrechnet werden können.

Einer Kombination der erfassten Bilddaten dient es auch, wenn erster und zweiter Detektor hinsichtlich ihrer jeweiligen Erfassungsintervalle zueinander synchronisiert sind.

Die Aufteilung der Detektionsstrahlung auf den ersten beziehungsweise auf den zweiten Detektionspfad kann in unterschiedlicher Weise erfolgen. Das Mittel zur Aufteilung der Detektionsstrahlung kann beispielsweise ein Strahlteiler, insbesondere ein Neutralteiler, ein dichroitischer Strahlteiler oder ein schaltbarer Spiegel sein.

Von Vorteil ist, wenn die Detektionsstrahlung in einem Teilungsverhältnis in die Detektionspfade gelenkt wird, die einen möglichst optimierten Betrieb beider Detektoren erlaubt. So kann der erste Detektor mit der höheren räumlichen Auflösung (Slowcam; längere Aufnahmedauer) proportional weniger Licht erhalten als der zweite Detektor mit der geringeren räumlichen aber der höheren zeitlichen Auflösung. Beispielsweise kann der Neutralteiler ein entsprechendes Teilungsverhältnis bewirken. Es ist auch möglich, dass die Detektionsstrahlung spektral aufgeteilt wird und ein Teil des Spektrums in den ersten Detektionspfad und ein anderer Teil des Spektrums in den zweiten Detektionspfad gelenkt wird. Wird ein schwenkbarer Spiegel zur Aufteilung verwendet, kann die Detektionsstrahlung zeitweise vollständig in den ersten oder in den zweiten Detektionspfad gelenkt werden. Dabei ist es vorteilhaft, wenn die Umschaltung des Spiegels zeitlich so gesteuert ist, dass die Slowcam entsprechend ihrer Wiederholfrequenz mit Detektionsstrahlung beleuchtet wird.

Die Detektionsstrahlung kann an einer Zwischenbildebene als Schnittstelle zwischen Mikroskop und erfindungsgemäßer Vorrichtung übergeben werden. Die Detektionsstrahlung wird mittels Fouriertransformation von einer Zwischenbildebene in eine optische Pupille überführt.

Die zu erfüllenden Anforderungen beispielsweise für die Untersuchung von Vorgängen im Gehirn kleiner Organismen, wie beispielsweise einer Fruchtfliege, sollen an einem Beispiel verdeutlicht werden. Erforderlich ist dabei eine Beobachtung von ca. 10.000 Neuronen. Die optische Auflösung sollte dabei mindesten in der Größe des Perikaryon der Neuronen mit ca. 5 $\mu$m liegen. Rechnet man das Volumen des Gehirns auf einen Würfel um, so sollte ein Volumen von 400 x 400 x 400 $\mu$m beobachtet werden können. Zur Erfüllung dieser Erfordernisse geeignete Verfahren sind unter anderem als plenoptisches Prinzip, Lichtfeldmikroskopie oder Integralabbildung bekannt und in der Mikroskopie angewandt.

Aus der Literatur sind verschiedene Methoden bekannt, um mit einem zweidimensionalen Sensor dreidimensionale Volumina abzubilden.

So unterscheidet man prinzipiell zwei Varianten denen gemeinsam ist, dass ein Mikrolinsenarray (MLA) vor einem Detektor angebracht ist. In der bislang häufig verwendeten Lichtfeldmikroskopie ist das MLA oft in der nominalen Bildebene platziert. Die Pixel hinter der jeweiligen Mikrolinse erfassen dann die jeweilige Winkelinformation des von der Probe (Objekt) ausgesandten Lichtes (z. B. Broxton et al. 2013; OPTICS EXPRESS 21: 25418 - 39).

Eine vorteilhafte Anordnung für die Mikroskopie ist allerdings gegeben, wenn die Pupillenebene der Anordnung optisch aufgeteilt ist. Hierfür wird ein Mikrolinsenarray derart angeordnet, dass der Detektor in einer zur Probenebene konjugierten Ebene steht. Die Mikrolinsen des Mikrolinsenarrays sind dabei in einer zur Objektivpupille optisch konjugierten Ebene implementiert. Die unten näher beschriebene Ausführung der erfindungsgemäßen Vorrichtung basiert auf dieser Variante.

Die Mikrolinsenarrays der erfindungsgemäßen Vorrichtung müssen nicht identisch sein. Unterschiedliche Mikrolinsenarrays können beispielsweise ausgewählt sein, um eine gute Anpassung an die Geometrie eines Detektors, bzw. an dessen Chip, zu erreichen oder um die räumliche Auflösung gegenüber der Detektionsrate etc. optimal gegeneinander auszubalancieren.

Derzeit verfügbare Detektoren erlauben eine parallelisierte Aufnahme mit einer großen Anzahl von Pixeln bis in den Bereich einiger Megapixel. Lediglich beispielhaft wird in den nachfolgenden allgemeinen Beschreibungen der Erfindung auf Detektoren der Firma PCO AG. (Kehlheim, Deutschland) abgehoben.

Beispielsweise erlaubt die Kamera pco.edge 26 MP die Aufnahme von 5120 x 5120 Pixeln, wobei jedes Pixel (Detektorelement) eine Größe von 2,5 $\mu$m $\times$ 2,5 $\mu$m hat. Damit ergibt sich eine sensitive Fläche des Detektors von 12,8 mm x 12,8 mm. Die Sensordiagonale hat damit eine Länge von 18,1 mm. Die Bildaufnahmerate der Kamera beträgt laut Datenblatt (Stand Juli 2020) 7,1 Bilder pro Sekunde (fps)(Slowcam), wobei die Pixeldatenrate mit 267 Mpixel/s angegeben wird.

Ferner ist beispielsweise der Detektor pco.edge 4.2 verfügbar, dessen sensitive Fläche eine Diagonale von 18,8 mm aufweist und in dieser Hinsicht mit der pco. Edge 26MP vergleichbar ist. Allerdings kann der Detektor pco.edge 4.2 noch deutlich schneller ausgelesen werden und ermöglicht damit Bildwiederholraten (fps) von bis 100 Bildern pro Sekunde (Fastcam). Der Detektor besitzt 2048 x 2048 Pixel mit einer Pixelgröße von je 6,5 x 6,5 $\mu$m. Die sensitive Fläche beträgt 13,3 x 13,3 mm.

Damit sind beide genannte Detektoren hinsichtlich ihrer äußeren Abmaße zueinander äquivalent. Entscheidend ist, dass sich der Detektor pco.edge 4.2 mit Bildwiederholraten bis 100 fps betreiben lässt. Zwischen zwei aufeinanderfolgenden Volumenaufnahmen liegt daher nur eine Zeitdifferenz von etwa 10 ms.

In Abhängigkeit der Probengeometrie lässt sich in einer Ausgestaltung der Erfindung die Aufnahmegeschwindigkeit noch weiter steigern, indem nur ein ausgewählter Teil der Pixel ausgelesen wird. Die Auswahl kann vorab, zufällig oder dynamisch erfolgen. Werden beispielsweise nur 2048 x 1024 Pixel der Fastcam ausgelesen, sind Raten von bis zu 200 Volumina pro Sekunde möglich. Bei einer weiteren Reduktion der ausgelesenen Pixelanzahl von beispielsweise 2048 x 512 Pixeln erreicht man sogar 400 Volumina pro Sekunde. Die Zeitdifferenz zwischen zwei erfassten vollen Volumina beträgt dann lediglich 2,5 ms. Diese Geschwindigkeiten sind entscheidend, um die Reaktion neuronaler Netzwerke vollumfänglich sowohl im Raum als auch in der Zeit erfassen zu können. So wird beispielsweise die mittlere Impulsrate (average firing rate) eines Neurons der Fruchtfliege mit etwa 40 Hz und die Größe eines Neurons mit etwa 2 bis 5 $\mu$m angegeben (Weisenburger, S. & Vaziri, A., 2018; Annual Review of Neuroscience 41: 431 - 452).

Die Geschwindigkeit der Bilderfassung kann in weiteren Ausgestaltungen der Erfindung erhöht werden, indem Interpolationen zwischen Pixeln durchgeführt werden und die interpolierten Werte für eine nachfolgende Verrechnung verwendet werden. Bei diesem Vorgehen müssen weniger Pixel ausgelesen werden.

Bildet die erfindungsgemäße Vorrichtung einen Bestandteil eines Mikroskops, dann kann dieses in einer möglichen Ausführung zur Beleuchtung der Probe mit einem gescannten Lichtblatt ausgebildet sein. Diese Art der Beleuchtung ist aus verschiedenen Gründen vorteilhaft. Zum Beispiel wird sehr gut Licht aus nicht interessierenden Probenebenen diskriminiert, die axiale Auflösung kann erhöht werden und gleichzeitig wird ein geringer Energieeintrag in die Probe und damit eine geringe Photoschädigung erreicht. Mittels des zweiten Detektors im zweiten Detektionspfad ist es möglich, an z. B. zehn Positionen des Lichtblattes zu messen und somit bei einer Framerate der Fastcam von 100 Hz zehn Volumina pro Sekunde abzubilden.

Um beispielsweise die in einer erfindungsgemäßen Vorrichtung verwendeten Detektoren auszuwählen, können die folgenden Erwägungen vorgenommen werden.

Für die laterale Auflösung bei der Fourier-Lichtfeldmikroskopie gilt (Scrofani, G. et al., 2018; BIOMEDICAL OPTICS EXPRESS 9: 335 - 346):

$$\delta x \leq max\left\{ \frac{\lambda N}{2NA_{MO}};\ 2\,ps\ \frac{f_{TL}\,f_{MO}}{f_{MLA}\,f_{pup}} \right\} \qquad (1).$$

Hierbei ist $\lambda$ die Wellenlänge des Lichts, $NA_{MO}$ die numerische Apertur des Mikroskopobjektivs, ps die Pixelgröße und f sind Brennweiten der Tubuslinse (TL), des Mikroskopbjektivs (MO), des Mikrolinsenarrays (MLA) und der Linse zur Pupillentransformation (pup).

Der erste Ausdruck beschreibt die wellenoptische Auflösung, bei der davon ausgegangen wird, dass die Punktbildfunktion am Detektor gemäß dem Nyquistkriterium abgetastet wird. Der zweite Ausdruck ist dann limitierend, wenn nicht mehr nach dem Nyquistkriterium abgetastet wird. Die Auflösung ist dann durch die Größe der in die Probe abgebildeten Pixel limitiert.

Da keine bessere Auflösung erzielt wird, wenn die Erfordernisse des Nyquistkriteriums wesentlich übererfüllt werden, muss nicht mit mehr Pixeln als nötig abgetastet werden. Die Verhältnisse der Brennweiten, Pixelzahlen und Mikrolinsen werden daher vorteilhaft so gewählt, dass beide Ausdrücke oben ungefähr gleich groß sind.

Die Größe des abgebildeten Zwischenbildes (ZBE), welches beispielsweise als Übergabestelle des Mikroskops fungiert, ergibt sich gemäß Gleichung (2):

$$ZBE \;=\; \#px\,ps\,\frac{f_{pup}}{f_{MLA}} \qquad\qquad (2).$$

Für die oben beschriebene Anordnung muss nun der Fall betrachtet werden, in welchem die Verhältnisse in beiden Detektionspfaden verschieden sind. Wie bereits ausgeführt, besitzt der schnellere Detektor (Fastcam) weniger, aber größere Pixel als der langsamere Detektor (Slowcam).

Halbiert man zum Beispiel die Pixelzahl $\#px$ bei doppelter Pixelgröße $ps$ in Gleichung (2), so bleibt das Zwischenbild und damit auch das Sehfeld gleich groß, wenn die Brennweite $f_{MLA}$ des Mikrolinsenarrays MLA und die Brennweite $f_{pup}$ der Pupillenlinse beibehalten werden. Wenn allerdings die Auflösung gemäß Gleichung (1) so eingestellt wird, dass beide Ausdrücke gleich groß sind, so wird die Auflösung bei größeren Pixeln $ps$ durch den zweiten Ausdruck dominiert. Da in dem Fall das Nyquistkriterium nicht mehr erfüllt wird, erzielt man mit den größeren Pixeln $ps$ eine schlechtere Auflösung. Die Auflösung würde sich etwa halbieren.

Um in beiden Detektionspfaden gleichwertige Abbildungsqualitäten zu erzielen, kann die Vorrichtung in einer weiteren Ausführung so ausgestaltet sein, dass in beiden Detektionspfaden etwa das gleiche Signal-Rausch-Verhältnis (signal-to-noise ratio; SNR) eingestellt ist. Am vereinfachten Beispiel der oben genannten Detektoren könnte die Vorrichtung so eingerichtet sein, dass die Slowcam bei 7 fps eine Belichtungszeit von ca. 143 ms aufweist, während die Fastcam jeweils 10 ms integriert. Um für beide Detektoren ein ähnliches Signal-zu-Rausch-Verhältnis einzustellen, wird die zu messende Detektionsstrahlung im gleichen Verhältnis auf beide Sensoren derart aufgeteilt, so dass in diesem Beispiel die Fastcam 143 Anteile der Detektionsstrahlung erhält, während die Slowcam nur 10 Anteile misst. Zusätzlich kann das Verteilungsverhältnis modifiziert werden, indem beispielsweise das laterale Sampling, also die Anzahl der für die Erfassung der PSF (Punktspreizfunktion, point spread function) genutzten Pixel, berücksichtigt werden.

Leichte Abweichungen vom Aufteilungsverhältnis sind ohne Einbuße der Qualität möglich, da das SNR nur mit der Quadratwurzel der Pixelzeit skaliert, wenn die Signalstärke ansonsten gleich ist. Weiterhin kann die Anordnung auch flexibel gestaltet werden, um jedes gewünschte Verhältnis einzustellen.

Neben der oben beschriebenen Verteilung der Signale der Detektionsstrahlung ist es auch möglich, dass nicht die Signale einer Wellenlänge, sondern vielmehr die Signale zweier verschiedener Wellenlängen auf die jeweiligen Detektoren verteilt werden. Dieses Vorgehen ist dann besonders von Vorteil, wenn schnelle Vorgänge, wie zum Beispiel Kalziumtransienten gemessen werden. Beispielsweise emittiert der Kalziumindikator GCaMP im grünen Spektralbereich. Dessen Fluoreszenzsignale können mit dem zweiten Detektor mit der hohen zweiten zeitlichen Auflösung erfasst werden, während die Strukturen der Probe, die sich nicht oder nur langsam verändern, mit dem Detektor mit der geringeren zeitlichen Auflösung erfasst werden. Beispielsweise kann die strukturelle Information von einem Membranfarbstoff stammen, der im roten Spektralbereich emittiert.

Die Beleuchtung kann daher als einfarbige oder mehrfarbige lineare oder nichtlineare Beleuchtung ausgebildet sein. So kann zum Beispiel eine Weitfeldbeleuchtung inkohärent oder mit Laser erfolgen, wobei die Beleuchtung vorteilhaft derart zeitlich veränderlich ist, dass auftretende Speckle über ein Messintervall der Fastcam hinreichend gemittelt und somit reduziert oder gar beseitigt sind.

Eine Beleuchtung, beispielsweise mit einem Lichtblatt, kann mittels eines Objektivs erfolgen, das als Beleuchtungsobjektiv und als Detektionsobjektiv dient. Diese Ausführung erlaubt eine kompakte Bauweise. In einer weiteren Ausführung kann die Beleuchtung beispielsweise seitlich eingestrahlt werden und somit unabhängig von dem Detektionsobjektiv sein. Zudem kann es vorteilhaft sein, wenn Mittel zum Einstellen einer zeitlich gepulsten Beleuchtung im Sinne einer stroboskopischen Beleuchtung im Bereich von Millisekunden vorhanden sind, um eine zeitliche Variation der Fluoreszenzsignale zu stimulieren.

In einer weiteren Ausführung der Erfindung kann einem der Detektoren ein MLA in einer Pupillenebene oder in einer nominalen Bildebene vorgeordnet sein, während ein weiterer Detektor ein aus dem Stand der Technik bekannter zweidimensionaler Detektor (2D-Detektor) ohne vorgeordnetem MLA ist. Der weitere Detektor kann zusätzlich zu dem ersten Detektor und/oder dem zweiten Detektor vorhanden sein. In diesem Fall wird das resultierende Bild aus den Bilddaten eines Detektors mit vorgeordnetem MLA und den Bilddaten des 2D-Detektors erzeugt.

Erfindungsgemäß weist der erste Detektor eine höhere räumliche Auflösung als der zweite Detektor auf.

In dem ersten Detektionspfad ist in einer Zwischenbildebene und dem ersten Detektor vorgeordnet ein sogenanntes Pinhole in Form einer Lochblende oder Schlitzblende vorhanden. Durch Wirkung des Pinholes werden außerfokale Anteile der Detektionsstrahlung abgeblendet so dass mittels des ersten Detektors eine konfokale Erfassung der Detektionsstrahlung erfolgt. Dem zweiten Detektor ist ein Mikrolinsenarray vorgeordnet. Vorteilhaft befindet sich im Beleuchtungsstrahlengang eine Scanvorrichtung, mittels der ein Beleuchtungslichtfleck über eine abzubildende Probe geführt werden kann. Eine aktuelle Ausrichtung der Scanvorrichtung lässt eine eindeutige Zuordnung einer Position des Beleuchtungslichtflecks beispielsweise in einer sich orthogonal zur optischen Achse eines Beleuchtungsobjektivs erstreckenden Ebene (X-Y-Ebene) zu. Ebenfalls wird eine aktuelle Position der Fokuslage eines Detektionsobjektivs (Z-Position) erfasst. In einer solcher Ausführung kann die Lichtquelle eines Laserscanmikroskops (LSM) für die Bereitstellung der Beleuchtungsstrahlung genutzt werden. Es ist also eine mögliche Ausführungsform der Erfindung, wenn ein LSM mit einem Lichtfeldmikroskop (LFM), beispielsweise beide an einem gemeinsamen Stativ befindlich, kombiniert werden und eine Verrechnung der unterschiedlich räumlich und/oder zeitlich aufgelösten und mit unterschiedlichen Funktionsweisen der Mikroskope erfassten Bilddaten zu einem dreidimensionalen resultierenden Bild erfolgt. Die Beleuchtungsstrahlung des LSM kann für beide Mikroskope (LSM und LFM) genutzt werden. Erforderlichenfalls wird zwischen den Detektionspfaden alternierend hin und her geschaltet. Optional kann eine Detektionsstrahlung auch anteilig auf die Detektionspfade aufgeteilt werden. Sowohl die Erfassung des zugehörigen Ortes erfasster Bilddaten als auch eine Information einer zugehörigen Z-Position der betreffenden Bilddaten erlauben die Erzeugung eines dreidimensionalen Bilddatensatzes mittels des ersten Detektors einer derartigen Ausführung der Vorrichtung. Alternativ zu einer Scanvorrichtung kann eine Relativbewegung zwischen Beleuchtungslichtfleck und Probe durch ein gesteuertes Verstellen eines z. B. motorisierten Probentisches bewirkt werden.

Die erfindungsgemäße Vorrichtung kann insbesondere mit einem Mikroskop verbunden oder eine Komponente eines Mikroskops sein. Ein Mikroskop mit einer erfindungsgemäßen Vorrichtung kann vielfältig eingesetzt werden und erlaubt insbesondere eine sowohl räumlich als auch zeitlich hoch aufgelöste, dreidimensionale Abbildung eines Probenvolumens. Beispielsweise kann ein Mikroskop mit einer erfindungsgemäßen Vorrichtung und einer ersten Funktionsweise mit einem anderen Mikroskop einer zweiten Funktionsweise verbunden sein. So kann beispielsweise ein Lichtfeldmikroskop mit einem Laserscanningmikroskop technisch wie erwähnt so verbunden sein, dass beispielsweise die Lichtquelle des Laserscanningmikroskops für beide Funktionsweisen verwendet wird.

Das Mikroskop kann in einem Beleuchtungsstrahlengang eine Lichtquelle, ein als Beleuchtungsobjektiv fungierendes Objektiv und eine Vorrichtung zur Erzeugung eines Lichtblatts aufweisen, wobei das Lichtblatt in einem Probenraum objektseitig vor dem Objektiv erzeugt wird beziehungsweise erzeugt werden kann.

Die Lichtquelle kann in einer weiteren möglichen Ausführung zur Bereitstellung von gepulstem Beleuchtungslicht ausgebildet sein. So können Pulse mit Pulsdauern im Bereich von Pikosekunden oder Femtosekunden erzeugt und bereitgestellt werden. Eine derartige Beleuchtung kann zur nichtlinearen Fluoreszenzanregung genutzt werden. Weiterhin ist mit einem entsprechenden Sensor damit eine Erfassung der Fluoreszenzlebensdauern möglich. Beispielsweise ist ein gepulster Laser als Lichtquelle verwendet. Einer der Detektoren kann ein SPAD-Array (Single Photon Avalanche Diode-Array) sein.

Die Vorrichtung zur Erzeugung eines Lichtblatts in einer Lichtblattebene kann beispielsweise eine Zylinderoptik, eine Scanvorrichtung oder eine Kombination aus beidem sein. Beide Ausführungen können dazu ausgelegt sein, ein bezüglich der optischen Achse des Beleuchtungsobjektivs schräg gestelltes Lichtblatt in einer sich entsprechend schräg erstreckenden Lichtblattebene zu erzeugen. Dazu kann ein durch Wirkung der Zylinderlinse geformter Beleuchtungslichtstrahl beziehungsweise mittels der Scanvorrichtung ein fokussierter Beleuchtungslichtstrahl der Lichtquelle in einen Eintrittsort in einer Objektivpupille (nachfolgend auch als Eintrittspupille bezeichnet) des Objektivs gerichtet sein, der abseits der optischen Achse des Objektivsliegt. Eine solche Ausführung ermöglicht es, ein gemeinsames Objektiv für die Beleuchtung und die Detektion zu verwenden. In alternativen Ausführungen können ein Beleuchtungsobjektiv und ein Detektionsobjektiv angeordnet sein.

Um eine Dicke des erzeugten Lichtblatts quer zur Lichtblattebene einzustellen, können im Beleuchtungsstrahlengang einstellbare optische Mittel, beispielsweise eine Zoomoptik und/oder eine Abblendvorrichtung, vorhanden sein. Die Einstellung der Dicke kann dabei manuell oder automatisch geschehen, indem beispielsweise eine auszuführende Messaufgabe gewählt und die Dicke des Lichtblatts entsprechend angepasst wird. Zusätzlich oder alternativ kann eine Regelschleife die Dicke des Lichtblatts beeinflussen, wenn beispielsweise vorgegebene Qualitätsparameter der erfassten Bilddaten nicht erreicht werden. Solche Qualitätsparameter sind beispielsweise ein vorbestimmtes SNR oder ein Signal-zu-Hintergrund-Verhältnis (SBR).

Die Aufgabe der Erfindung wird außerdem mit einem Verfahren zur Erfassung von Bilddaten gelöst, bei dem Detektionsstrahlung, insbesondere mindestens eines Mikroskops, auf einen ersten Detektionspfad und einen zweiten Detektionspfad aufgeteilt wird.

Im ersten Detektionspfad wird die Detektionsstrahlung mittels eines ersten Detektors mit einer ersten zeitlichen Auflösung (erste Detektionsrate) und einer ersten räumlichen Auflösung erfasst. Im zweiten Detektionspfad wird die Detektionsstrahlung mittels eines zweiten Detektors mit einer zweiten zeitlichen Auflösung (zweite Detektionsrate) und einer zweiten räumlichen Auflösung erfasst, wobei die erste zeitliche Auflösung geringer als die zweite zeitliche Auflösung und/oder die erste räumliche Auflösung höher als die zweite räumliche Auflösung ist.

Erfindungsgemäß werden die erfassten Bilddaten beider Detektoren miteinander verrechnet, um ein dreidimensional aufgelöstes resultierendes Bild zu erhalten. Dabei ist es beispielsweise möglich, in dem ersten und zweiten Detektionspfad erfasste Bilddaten je Detektor zu einem dreidimensional aufgelösten Bild zu verrechnen und anschließend die dreidimensional aufgelösten Bilder zu einem resultierenden Bild zu kombinieren, oder die erfassten Bilddaten beider Detektoren werden zu einem dreidimensional aufgelösten resultierenden Bild verrechnet.

In einer weiteren Ausgestaltung des Verfahrens werden Bilddaten der höheren räumlichen Auflösung beziehungsweise Bilddaten der höheren zeitlichen Auflösung zur rechnerischen Erhöhung der räumlichen Auflösung und/oder der zeitlichen Auflösung der Bilddaten mit der jeweils geringeren räumlichen beziehungsweise der geringeren zeitlichen Auflösung verwendet.

Vorteile dieser Verfahrensausgestaltung sind insbesondere darin zu sehen, dass man die räumlich höher aufgelösten Daten, die mit einer geringeren Detektionsrate gemessen werden, dazu nutzt, auch die Bilder mit hoher Detektionsrate aber schlechterer räumlicher Datenerfassung (sampling), also mit geringerer räumlicher Auflösung, virtuell mit mindestens der gleichen oder einer besseren Auflösung darstellen zu können.

Erzielt man beispielsweise die gleiche räumliche Auflösung wie im räumlich besser aufgelösten Bild, entspricht dies einem mehrfachen Abgleich mit den tatsächlich vorliegenden Strukturen der Probe (auch als Feldvergleich, Bodenwirklichkeit oder "ground truth" bezeichnet) während einer Bilderfassungssequenz.

Um ein Beispiel zu geben kann angenommen werden, dass die Fastcam mit 100 Hz arbeitet und daher räumlich schlechter aufgelöste Bilddaten erfasst als die Slowcam, die mit 1 Hz arbeitet und gut aufgelöste räumliche Bilddaten bereitstellt. Beispielsweise kann alle 100 Bilder (frames) ein Abgleich des "ground truth" erfolgen.

Die Verrechnung der erfassten Bilddaten und/oder die Kombination der Bilddaten beziehungsweise der Bilder zu einem resultierenden Bild kann in weiteren Ausgestaltungen des Verfahrens unter Anwendung maschinellen Lernens (machine learning), insbesondere unter Anwendung von Convolutional Neural Networks, ausgeführt werden.

Wie bereits ausgeführt, liegt eine wesentliche erfindungsgemäße Erkenntnis darin, die Bilddaten derart zu nutzen, dass die Informationen beider Detektionspfade vorteilhaft miteinander kombiniert werden, um sowohl eine schnelle Bildaufnahme als auch eine sehr hohe Bildgüte, d. h. insbesondere eine hohe räumliche Auflösung, zu erzielen. Eine erste Möglichkeit besteht zunächst darin, die Bilddaten kombiniert darzustellen. Hierfür werden die räumlich höher aufgelösten Bilder oder Bildstapel in geeigneter Weise mit den zeitlich höher aufgelösten Bilddaten dargestellt. Beispielsweise werden die Bilddaten von Slowcam und Fastcam als Bild-zu-Bild-Abbildung derart miteinander verrechnet, dass auch die Bilder, welche mit hoher zeitlicher Auflösung bei geringerer räumlicher Auflösung aufgenommen wurden, über die an den jeweiligen zeitlichen Stützstellen aufgenommenen hochauflösenden Bilder, welche allerdings aufgrund der höheren Pixelzahlen des Detektors (Slowcam) langsamer aufgenommen worden sind, eine Bildqualität aufweisen, die einer höheren räumlichen Auflösung entsprechend würde.

Eine weitere Möglichkeit stellen die erwähnten Convolutional Neural Networks (CNN) dar. Im Falle vieler Schichten (layer) des Netzwerks spricht man auch von deep CNNs. Diese Algorithmen werden zum Beispiel genutzt, um eine virtuelle Erhöhung der Auflösung bei klassisch aufgenommenen Bildern zu erzielen. Hierfür wird das Netzwerk mit hochaufgelösten Daten des Typs des entsprechenden Objektes angelernt und trainiert. Nachfolgend kann das trainierte CNN auch aus weniger gut aufgelösten Daten eine virtuelle Hochauflösung berechnen (z. B. Wang, H. et al., 2018; Nature Methods 16: 103 - 110). Ein Vergleich verschiedener Algorithmen findet sich in Zhang, H. et al., 2019; Sensors 19: 3234.

Die zur Nutzung vorgesehenen Algorithmen werden derart angelernt, dass sie für eine Verbesserung der Auflösung der aufgenommenen Bilddaten eingesetzt werden können. Soll beispielsweise Hirngewebe abgebildet werden, wird das Netzwerk mit hinreichend vielen Bilddaten von Hirngeweben angelernt. Im Ergebnis ist eine Verbesserung der Bildqualität in beiden Detektionspfaden der angegebenen Vorrichtung möglich.

Von Vorteil ist, dass unterschiedliche Mikroskopobjektive verwendet werden können, ohne die Anordnung der Vorrichtung verändern zu müssen. Dies gelingt insbesondere dann, wenn die Pupillengröße ungefähr gleich groß ist. Es können vorteilhaft solche Objektive verwendet sein, deren NA/M-Verhältnis gleich ist (z. B. 40x/1,2 NA; 20x/0,6 NA, 10x/0,3 NA). Damit ist eine Beobachtung verschieden großer Volumina bei jeweils etwas verschiedener Auflösung möglich.

Die Verrechnung der Bilddaten von Aufnahmen kann mit verschiedenen Vergrößerungsverhältnissen vorgenommen werden. Dazu wird ein höher aufgelöst erfasstes kleineres Volumen in einem etwas geringer aufgelösten großen erfassten Volumen eingebettet.

Für die Bereitstellung der Beleuchtung kann ein Laser-Scanning-Mikroskop (LSM), beispielsweise in Form eines Zusatzmoduls verwendet werden. Hochaufgelöste, mit einem LSM-Modus erfasste Bilddaten können beispielsweise mit geringer aufgelösten Bilddaten einer 3D-Messung gemäß der Erfindung kombiniert werden. Hierfür kann das LSM in einer optional auswählbaren Betriebsart derart eingestellt werden, dass eine Lichtblatterzeugung ermöglicht wird. Dies kann beispielsweise durch eine Fokussierung des Laserstrahls in die Eintrittspupille des Mikroobjektives erreicht werden.

Entsprechend ist auch eine Kombination der Erfassung nach der Lichtfeld-Technologie mit der Strukturierte-Beleuchtung-Mikroskopie (structured illumination microscopy; SIM) möglich.

Die erfassten und/oder verrechneten Bilddaten können in weiteren Ausgestaltungen der Erfindung mit Messdaten eines LSM oder auch anderer bildgebender Mikroskopieverfahren (z. B. Phasenkontrast; Differentieller Interferenzkontrast; Strukturierte-Beleuchtungs-Mikroskopie etc.) kombiniert werden.

Wird maschinelles Lernen eingesetzt, kann mit diesem eine Verbesserung der Bildauflösung auf Basis eines entsprechend angelernten CNN erzielt werden. Das CNN kann fortwährend unter Nutzung einer Bild-zu-Bild-Korrespondenz zwischen den beiden Detektionspfaden angepasst und verbessert werden.

Weitere Verbesserungen der Bildqualität können erreicht werden, indem zum Beispiel Daten eines dreidimensional aufgenommenen Bildstapels in den Anlernprozess des CNN oder in einer anderen Art und Weise der Bildfusion einfließen. Die Daten können beispielsweise durch ein gleichzeitig betriebenes Laser-Scanning-Mikroskop gewonnen und bereitgestellt werden. Die Erfindung erlaubt außerdem optische Manipulationen in 2D und 3D (z. B. holografisch). Außerdem kann eine Auswertung der Messungen im Sinne von dSTORM, PALM etc. vorgenommen werden.

Vorteile der Erfindung liegen in einer guten bis sehr guten räumlichen Auflösung und einer sehr guten zeitlichen Auflösung durch hohe Parallelisierung der Voxel-Erfassung. Bei Beleuchtung mit einem Lichtblatt kann eine starke Unterdrückung des Hintergrunds und/oder eine hohe axiale Auflösung erreicht werden. Vorteilhaft ist ferner, dass die Erfindung an einem vorhandenen Mikroskop umgesetzt werden kann und dabei die numerische Apertur des Mikroskopobjektivs voll nutzbar ist. Nach einer Verrechnung der Bilddaten kann eine axiale Auflösung erreicht werden, die im Vergleich zur Schärfentiefe des Objektivs mit voller numerischer Apertur nur geringfügig verschlechtert ist. Die Erfindung ist beispielsweise aufgrund ihrer geringen Belastung für die Probe und einer schnellen dreidimensionalen Bildgebung vorteilhaft für die Verwendung an lebenden Proben geeignet.

Mittels der erfindungsgemäßen Vorrichtung und des erfindungsgemäßen Verfahrens können gleichzeitig dreidimensionale Bereiche einer Probe mit einer zeitlichen Auflösung im Bereich weniger Millisekunden bei gleichzeitig hinreichender räumlicher Auflösung von ca. 2-3 $\mu$m erfasst werden. Außerdem werden störende Hintergrundsignale effektiv unterdrückt, sodass eine hohe Sensitivität bei Abbildung der beobachteten Bereiche der Probe erzielt wird. In der 3D Probe sollen somit schließlich möglichst viele Voxel mit möglichst hoher Zeitauflösung gleichzeitig aufgenommen werden. Die hier vorgeschlagene Methode erlaubt dies und bietet eine sehr hoch parallelisierte Abbildung dreidimensionaler Volumina.

Die Erfindung erlaubt insbesondere Beobachtungen von Objekten in einer Größenordnung von etwa 0,005 mm bis etwa 3 mm (z. B. bis hinab zu einer Größe von Dendriten). Die zeitliche Auflösung beträgt etwa 0,01 bis 1 Sekunde, kann aber in speziellen Fällen auch 0,001 bis 100 Sekunden betragen.

Die hier vorgeschlagene Lösung erlaubt einerseits eine Abbildung mit hoher optischer Auflösung und auf der anderen Seite eine sehr hohe Volumenabbildungsrate.

Die Erfindung wird nachfolgend anhand von Ausführungsbeispielen und Abbildungen näher beschrieben. Es zeigen:

Fig. 1     eine schematische Darstellung eines ersten Ausführungsbeispiels einer erfindungsgemäßen Vorrichtung;

Fig. 2     eine schematische Darstellung eines zweiten Ausführungsbeispiels einer erfindungsgemäßen Vorrichtung;

Fig. 3     eine schematische Darstellung eines dritten Ausführungsbeispiels einer erfindungsgemäßen Vorrichtung;

Fig. 4     eine schematische Darstellung eines ersten Ausführungsbeispiels eines Mikroskops mit einer erfindungsgemäßen Vorrichtung und mit Mitteln zur Erzeugung eines Lichtblatts;

Fig. 5     eine schematische Darstellung eines zweiten Ausführungsbeispiels eines Mikroskops mit einer erfindungsgemäßen Vorrichtung und mit Mitteln zur Erzeugung eines Lichtblatts;

Fig. 6     ein Ablaufschema einer ersten Ausgestaltung des erfindungsgemäßen Verfahrens; und

Fig. 7     ein Ablaufschema einer zweiten Ausgestaltung des erfindungsgemäßen Verfahrens.

Ein allgemeiner Aufbau einer erfindungsgemäßen Vorrichtung 1 weist entlang eines Strahlengangs ein Mittel 2 zur Aufteilung von Detektionsstrahlung in Form eines Strahlteilers (Strahlteiler 2) auf, durch dessen Wirkung Detektionsstrahlung auf einen ersten Detektionspfad 3 mit einem ersten Detektor 4 und einem vorgeordneten ersten Mikrolinsenarray 5 sowie auf einen zweiten Detektionspfad 6 mit einem zweiten Detektor 7 und einem vorgeordneten zweiten Mikrolinsenarray 8 aufgeteilt wird. Die Mikrolinsenarrays 5 und 8 sind jeweils in einer Pupille angeordnet. Sind in den Ausführungsbeispielen optische Linsen 9 angegeben, stehen diese optional auch für entsprechende Kombinationen von optischen Elementen (Linsensysteme).

Der erste Detektor 4 erlaubt eine erste räumliche Auflösung, die gegenüber der räumlichen Auflösung des zweiten Detektors 7 höher ist. Eine zeitliche Auflösung des ersten Detektors 4 (Slowcam) ist geringer als die zeitliche Auflösung des zweiten Detektors 7 (Fastcam). Erster und zweiter Detektor 4 und 7 können in weiteren Ausführungen auch in dem jeweils anderen Detektionspfad 3 beziehungsweise 6 angeordnet sein.

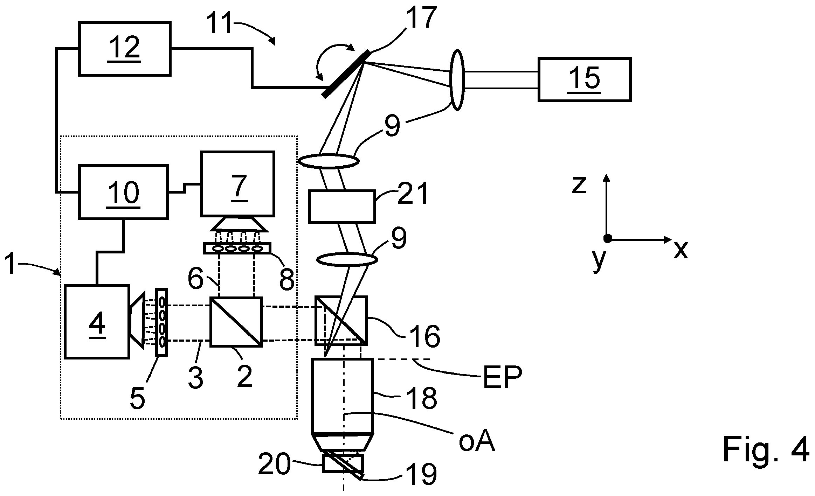

Eine von einem Mikroskop 11 kommende und durch Wirkung einer Tubuslinse 9TL fokussierte Detektionsstrahlung passiert eine optionale Feldblende 14 in einer Zwischenbildebene, gelangt zu einer optischen Linse 9 und wird durch Wirkung des Strahlteilers 2 auf den ersten Detektionspfad 3 und den zweiten Detektionspfad 6 aufgeteilt. Die Abbildung der Pupillenebene des Mikroskops 11, insbesondere einer Pupillenebene (back focal plane) des Mikroskopobjektivs 18 (siehe z. B. Fig. 4) in die Ebenen der Mikrolinsenarrays 8 erfolgt über das Linsensystem 9TL, 9. Die Linse 9TL fungiert als Tubuslinse während die nachgeordnete Linse 9 als Fourierlinse wirkt, d.h. eine Fouriertransformation der Detektionsstrahlung bewirkt.

Die von den Detektoren 4, 7 erfassten Bilddaten werden einer Auswerteeinheit 10 in Form eines Rechners oder eines FPGA zugeführt. Diese ist derart konfiguriert, dass die Auswertung der erfassten Bilddaten unter Berücksichtigung von Ortsinformationen, Winkelinformationen und Intensitätswerten erfolgt und beispielsweise entweder die erfassten Anteile der Winkelinformationen je Detektor 4, 7 als Bilddaten zu je einem dreidimensional aufgelösten Bild verrechnet und anschließend zu einem resultierenden Bild kombiniert werden oder die erfassten Anteile der Winkelinformationen beider Detektoren 4, 7 als Bilddaten zu einem dreidimensional aufgelösten resultierenden Bild kombiniert werden.

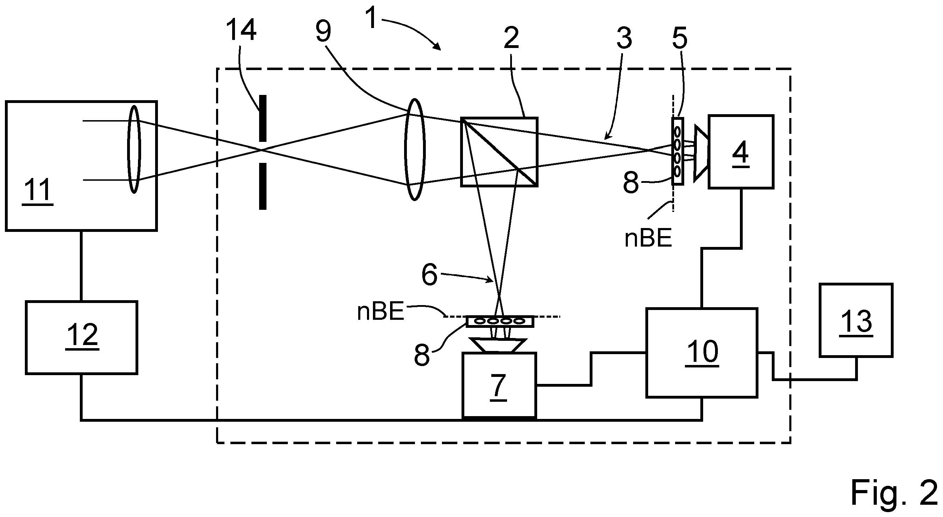

Die Auswerteeinheit 10 ist optional mit einer Anzeige 13, beispielsweise einem Monitor, verbunden, auf der die Bilddaten und/oder das resultierende Bild bzw. ein resultierender Bildstapel darstellbar sind. Außerdem ist die Auswerteeinheit 10 optional mit einer Steuereinheit 12 verbunden, die insbesondere Bestandteil des Mikroskops 11 sein kann. In weiteren möglichen Ausführungen ist die Steuereinheit 12 kein integraler Bestandteil des Mikroskops 11, kann aber mit diesem in einer zur Übertragung von Daten geeigneten Weise in Verbindung stehen (siehe z. B. schematisch in Fig. 2).

Die Steuereinheit 12 ist konfiguriert, um aufgrund von Ergebnissen der Auswerteeinheit 10 Steuersignale zu generieren. Diese können zur Ansteuerung von Funktionen des Mikroskops 11 dienen.

In einem weiteren Ausführungsbeispiel der Vorrichtung 1 sind die Mikrolinsenarrays 5, 8 jeweils in einer nominalen Bildebene nBE angeordnet (Fig. 2). Von dort wird die erfasste Detektionsstrahlung durch Wirkung der Mikrolinsen auf den jeweiligen Detektor 4 beziehungsweise 7 gerichtet. Die nominale Bildebene nBE stellt somit eine Zwischenbildebene dar. Eine als Fokuslinse fungierende optische Linse 9 ist vor dem Strahlteiler 2 angeordnet. Abhängig davon, ob sich eine (Punkt-) Lichtquelle (nicht gezeigt), deren Licht erfasst werden soll, in einer Objektebene (Fokusebene, Fokalebene) des Objektivs 18 (siehe z. B. Fig. 4) befindet, wird die Punktlichtquelle wiederum (idealisiert) punktförmig auf das MLA 5, 8 abgebildet. Befindet sich die Punktlichtquelle in Detektionsrichtung oberhalb beziehungsweise unterhalb der Objektebene, so wird die Punktlichtquelle nicht exakt in die nominale Bildebene nBE, sondern danach beziehungsweise davor (siehe beispielhaft Fig. 2) abgebildet. Anhand der mittels der einzelnen Pixel erfassten Intensitätswerte, die zudem Ortsinformationen darstellen, sowie anhand der erfassten Winkelinformationen, kann die räumliche Lage der Punktlichtquelle beispielsweise mittels der entsprechend konfigurierten Auswerteeinheit 10 errechnet werden.

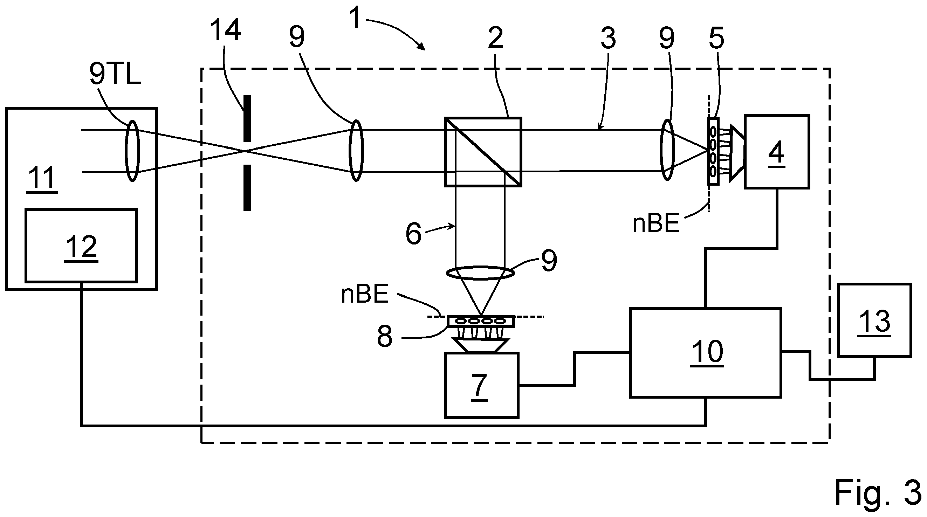

Das dritte Ausführungsbeispiel der Vorrichtung 1 weist ebenfalls die Mikrolinsenarrays 5 und 8 jeweils in einer nominalen Bildeebene nBE auf (Fig. 3). Die Detektionsstrahlung wird durch Wirkung von in den jeweiligen Detektionspfaden 3 beziehungsweise 6 angeordneten optischen Linsen 9 in die nominale Bildebene nBE fokussiert.

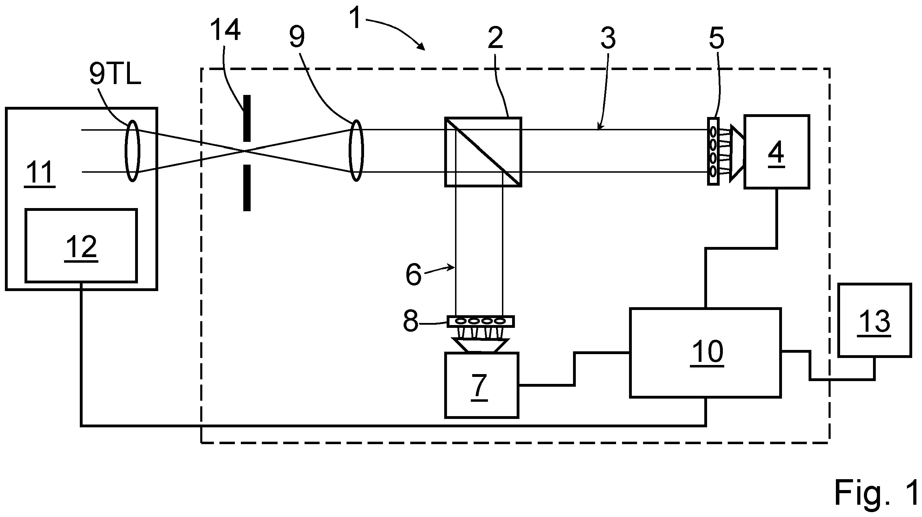

Die in den Figuren 1 bis 3 dargestellten Ausführungsbeispiele können beispielsweise für eine 2-Kanal-Lichtfeldmikroskopie eingesetzt werden. Eine Trennung spektraler Anteile der Detektionsstrahlung kann mittels des Strahlteilers 2 erfolgen.

In einem Ausführungsbeispiel der erfindungsgemäßen Vorrichtung 1 in einem Mikroskop 11 (Fig. 4) sind in einem Anregungsstrahlengang eine Lichtquelle 15 zur Bereitstellung eines Laserlichts als Anregungslicht, optische Linsen 9, eine lichtlenkende Einrichtung 17 oder Scanvorrichtung 17, ein Farbteiler 16 und ein als Beleuchtungsobjektiv fungierendes Objektiv 18 mit einer Eintrittspupille EP vorhanden. Die Lichtquelle 15, insbesondere in Form einer Laserlichtquelle, kann optional gepulst betrieben werden.

In einem Detektionsstrahlengang (durch unterbrochene Volllinien symbolisiert) sind eine optische Linse 9 und der Strahlteiler 2 angeordnet, durch den Detektionsstrahlung entlang des ersten Detektionspfads 3 mit dem ersten Mikrolinsenarray 5 und dem ersten Detektor 4 und/oder entlang des zweiten Detektionspfads 6 mit dem zweiten Mikrolinsenarray 8 und dem zweiten Detektor 7 gelenkt wird. Die Detektoren 4 und 7 stehen mit der Auswerteeinheit 10 und diese mit der Steuereinheit 12 in einer zum Austausch von Daten geeigneten Weise in Verbindung. Mittels der Steuereinheit 12 können Steuerbefehle generiert werden, die zum Ansteuern der Scanvorrichtung 17 (fortan auch: Scanner 17) dienen. In weiteren Ausführungen kann auch die Lichtquelle 15 durch die Steuereinheit 12 angesteuert sein.

Beim Betrieb des Mikroskops 11 mit der erfindungsgemäßen Vorrichtung 1 wird von der Laserlichtquelle 15 ausgesendetes Laserlicht fokussiert und gelangt zur Scanvorrichtung 17. Die durch die Steuereinheit 12 angesteuerte Scanvorrichtung 17 lenkt das Laserlicht gesteuert in einer x-Richtung x und/oder in einer y-Richtung y ab. Mit der Scanvorrichtung 17 können der Einstrahlwinkel und ein Eintrittsort des Anregungslichtes in der Eintrittspupille EP (Objektivpupille) variiert werden.

Das Anregungslicht wird nach Durchlaufen des dichroitischen Farbteilers 16 in einen Eintrittsort in der Eintrittspupille EP gerichtet, der abseits der optischen Achse oA des Objektivs 18 liegt. Im Ergebnis wird objektseitig durch das Objektiv 18 ein zur optischen Achse oA inkliniertes Lichtblatt 19 in einer entsprechend inklinierten Lichtblattebene erzeugt. Befindet sich in einem Probenraum 20 vor dem Objektiv 18 eine Probe, kann das Lichtblatt 19 in diese gerichtet werden.

Im Anregungsstrahlengang (= Beleuchtungsstrahlengang) können optional einstellbare optische Mittel 21 wie zum Beispiel eine Zoomoptik oder eine Blende vorhanden sein, durch deren Wirkung eine Dicke des Lichtblatts 19 quer zur Lichtblattebene einstellbar ist (nur angedeutet gezeigt). Eine Ansteuerung des einstellbaren optischen Mittels 21 kann mittels der Steuereinheit 12 erfolgen.

Durch Wirkung des aus dem Anregungslicht gebildeten Lichtblatts 19 kann in der Probe Fluoreszenz angeregt und als Detektionslicht (Detektionsstrahlung) emittiert werden. Emittiertes Detektionslicht wird mit dem Objektiv 18, das sowohl als Beleuchtungsobjektiv als auch als Detektionsobjektiv dient, gesammelt. Im Farbteiler 16 wird das gegenüber dem Anregungslicht längerwellige Detektionslicht in den weiteren Verlauf des Detektionsstrahlengangs reflektiert und gelangt über den Strahlteiler 2 zu dem ersten Mikrolinsenarray 5 und/oder dem zweiten Mikrolinsenarray 8. Die angedeutet gezeigten Mikrolinsen können als einzelne Abbildungssysteme angesehen werden. Die von den einzelnen Mikrolinsen bewirkten Bildpunkte werden durch entsprechend positionierte Detektorelemente der Detektoren 4 beziehungsweise 7 als Bilddaten erfasst und der Auswerteeinheit 10 zugeleitet.

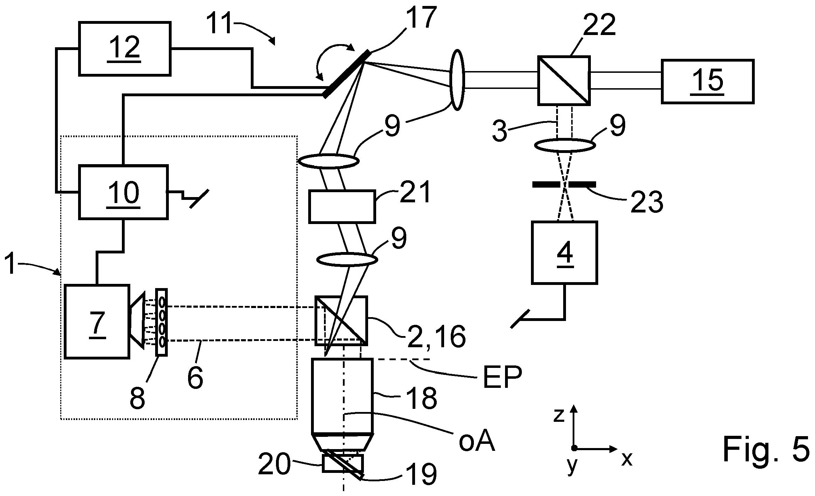

Eine weitere mögliche Ausführung der Erfindung ist in Fig. 5 in Anlehnung an Fig. 4 dargestellt. Im Beleuchtungsstrahlengang ist zwischen der Lichtquelle 15 und der Scanvorrichtung 17 ein weiterer dichroitischer Strahlteiler 22 angeordnet. Durch dessen Wirkung wird Detektionsstrahlung, die von dem Probenraum 20 kommend den Strahlteiler 16 und die nachfolgenden optischen Elemente durchlaufen hat und durch Wirkung der Scanvorrichtung 17 in einen ruhenden Strahl (descannt) überführt wurde, in den letzten Abschnitt des ersten Detektionspfades 3 gelenkt. Der Strahlteiler 16 fungiert in diesem Ausführungsbeispiel (auch) zur Aufteilung der erfassten Detektionsstrahlung auf den ersten und den zweiten Detektionspfad 3, 6 (Strahlteiler 2) und kann dichroitisch sein oder Detektionsstrahlung in einem bestimmten Verhältnis aufteilen. Die Detektionsstrahlung wird mittels einer optischen Linse 9 in eine Zwischenbildebene fokussiert, in der sich ein Pinhole 23 in Form einer Lochblende oder einer Schlitzblende befindet. Durch Wirkung des Pinholes 23 werden diejenigen Anteile aus dem Strahlenbündel der Detektionsstrahlung entfernt oder zumindest weitgehend reduziert, die aus außerfokalen Bereichen stammen. Als erster Detektor 4 kann beispielsweise ein Sekundärelektronenvervielfacher (photomultiplier tube, PMT), ein Array mehrerer PMT's oder ein zweidimensionaler Detektor (siehe oben) verwendet sein. Der erste Detektor 4 steht mit der Auswerteeinheit 10 in Verbindung. Diese ist wiederum mit der Scanvorrichtung 17 verbunden, um Daten zu einer jeweils aktuellen Ausrichtung der Scanvorrichtung 17 zu erhalten. Anhand der aktuellen Ausrichtung kann den mittels des ersten Detektors 4 erfassten einzelnen Bilddaten eine Position in einer X-Y-Ebene zugeordnet werden. Informationen zur axialen Position (Position in z-Richtung, Z-Position) können anhand der bekannten Lage der aktuellen Fokusebene des Objektivs 18 sowie optional unter Berücksichtigung einer für das Bilderfassungssystem bekannten Punktbildspreizfunktion (point spread function; PSF) ermittelt werden. Eine Erfassung von Bilddaten kann an unterschiedlichen z-Positionen (z-Stapel) erfolgen. Auf diese Weise können mit dem ersten Detektor 4 dreidimensional aufgelöste Bilddaten erfasst werden. Infolge der Gestaltung des ersten Detektionspfades 3 als ein konfokaler Detektionspfad ist eine gegenüber dem zweiten Detektor 7 höhere räumliche Auflösung erreicht. Wird zwischen einer Erfassung mittels des ersten Detektionspfads 3 (konfokal) und dem zweiten Detektionspfad 6 alternierend geschaltet, kann das einstellbare optische Mittel 21 entsprechend angesteuert werden, um entweder einen Beleuchtungslichtfleck oder ein Lichtblatt 19 zu erzeugen.

Der zweite Detektionspfad 6 erhält durch Wirkung des Strahlteilers 2, 16 Detektionsstrahlung, die auf den zweiten Detektor 7 abgebildet und erfasst wird. Dem zweiten Detektor 7 ist ein Mikrolinsenarray 8 vorgeordnet. Der Strahlteiler 2, 16 kann in weiteren Ausführungen beispielsweise durch einen schaltbaren Spiegel ersetzt sein. Die mittels des ersten Detektors 4 und des zweiten Detektors 7 erfassten Bilddaten werden durch die Auswerteeinheit 10 zusammengeführt und ein dreidimensionales resultierendes Bild errechnet.

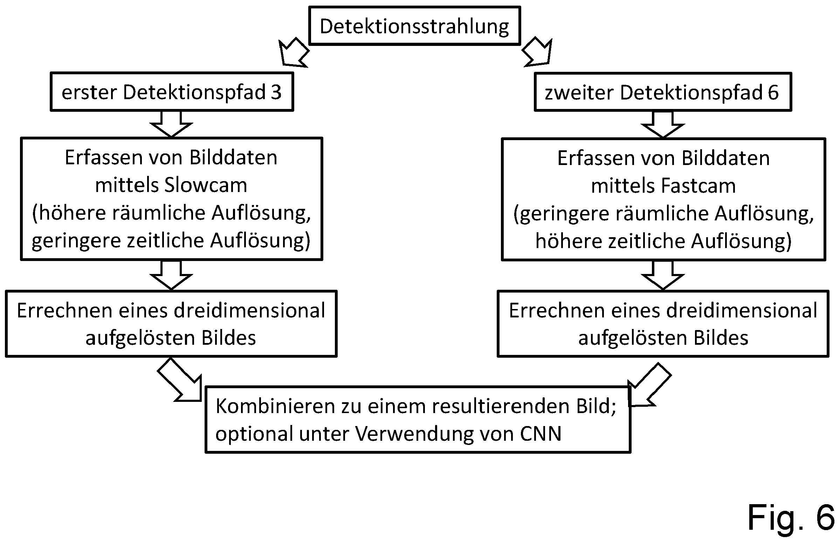

Das erfindungsgemäße Verfahren kann in zwei alternativen Ausgestaltungen durchgeführt werden. In der ersten Alternative (Fig. 6) wird die Detektionsstrahlung in den ersten und/oder den zweiten Detektionspfad 3, 6 gelenkt und dort mittels des jeweils vorhandenen Detektors 4, 7 beispielsweise entsprechend des Prinzips der Lichtfeldtechnologie erfasst. Sowohl aus den erfassten Bilddaten der Slowcam des ersten Detektionspfads 3 als auch aus den Bilddaten der Fastcam des zweiten Detektionspfades 6 wird jeweils ein dreidimensional aufgelöstes Bild errechnet. Anschließend werden die dreidimensional aufgelösten Bilder der beiden Detektionspfade 3, 6 miteinander zu einem resultierenden Bild kombiniert.

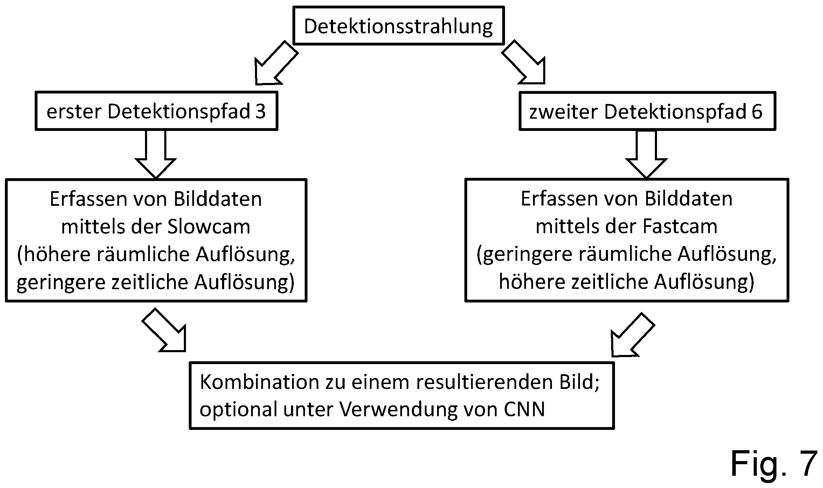

In einer alternativen Ausgestaltung des Verfahrens werden die erfassten Bilddaten der Slowcam und der Fastcam zu einem resultierenden dreidimensional aufgelösten Bild kombiniert, ohne zuvor für jeden der Detektionspfade 3, 6 beziehungsweise für jeden der Detektoren 4, 7 mindestens ein dreidimensional aufgelöstes Bild zu erzeugen (Fig. 7).

In weiteren Ausgestaltungen des Verfahrens können die mittels des ersten Detektors 4 und des zweiten Detektors 7 erfassten Bilddaten beziehungsweise daraus errechnete Bilder unter Anwendung eines CNN (Convolutional Neural Network) aufeinander abgebildet und ein dreidimensional aufgelöstes resultierendes Bild errechnet werden.

Bezugszeichen

| | |
|---|---|
| 1 | Vorrichtung |
| 2 | Mittel zur Aufteilung der Detektionsstrahlung / Strahlteiler |
| 3 | erster Detektionspfad |
| 4 | erster Detektor (Slowcam) |
| 5 | erstes Mikrolinsenarray |
| 6 | zweiter Detektionspfad |
| 7 | zweiter Detektor (Fastcam) |
| 8 | zweites Mikrolinsenarray |
| 9 | optische Linse |
| 10 | Auswerteeinheit |
| 11 | Mikroskop |
| 12 | Steuereinheit |
| 13 | Anzeige |
| 14 | Feldblende |
| 16 | Farbteiler |
| 15 | Lichtquelle |
| 17 | Scanvorrichtung |
| 18 | Objektiv |
| 19 | Lichtblatt |
| 20 | Probenraum |
| 21 | einstellbares optisches Mittel |
| 22 | Strahlteiler (für konfokalen Strahlengang) |
| 23 | Pinhole |
| EP | Eintrittspupille |
| oA | optische Achse |
| nBE | nominale Bildebene |

**Patentansprüche**

1. Vorrichtung (1) zur Erfassung von Bilddaten umfassend

    - einen Detektionsstrahlengang, entlang dem Detektionsstrahlung mindestens eines Mikroskops (11) geführt wird beziehungsweise führbar ist;
    - und ein Mittel zur Aufteilung der Detektionsstrahlung (2) auf einen ersten Detektionspfad (3) und einen zweiten Detektionspfad (6);
    - in dem ersten Detektionspfad (3) einen ersten Detektor (4) und in dem zweiten Detektionspfad (6) einen zweiten Detektor (7), wobei mindestens einem der Detektoren (4, 7) ein Mikrolinsenarray (5, 8) vorgeordnet ist;

        o wobei der erste Detektor (4) eine erste räumliche Auflösung in Form einer Bildauflösung und der zweite Detektor (7) eine zweite räumliche Auflösung aufweist und die erste räumliche Auflösung höher als die zweite räumliche Auflösung ist; wobei die Bildauflösung durch eine räumliche Auflösung der erfassten Bilddaten bestimmt ist, und
        o der erste Detektor (4) eine erste zeitliche Auflösung in Form einer Detektionsrate und der zweite Detektor (7) eine zweite zeitliche Auflösung aufweist, wobei die erste zeitliche Auflösung geringer als die zweite zeitliche Auflösung ist, und die Detektionsrate des betreffenden Detektors (4, 7) durch die Anzahl aufgenommener Bilder pro Sekunde bestimmt ist,

        **dadurch gekennzeichnet, dass**
        - eine Auswerteeinheit (10) zur Auswertung der erfassten Bilddaten der ersten und zweiten Detektoren (4, 7) vorhanden ist,

- wobei die Auswerteeinheit (10) derart konfiguriert ist, dass die Auswertung der Bilddaten beider Detektoren (4, 7) erfolgt und aus diesen ausgewerteten Bilddaten ein dreidimensional aufgelöstes resultierendes Bild erzeugt wird, indem die Bilddaten beider Detektoren (4, 7) miteinander verrechnet werden;

und entweder

i) in dem ersten Detektionspfad (3) in einer Zwischenbildebene und dem ersten Detektor (4) optisch vorgeordnet ein Pinhole (23) vorhanden ist, so dass mittels des ersten Detektors (4) eine konfokale Erfassung der Detektionsstrahlung erfolgt und dadurch mittels des ersten Detektors (4) eine höhere räumliche Auflösung als mit dem zweiten Detektor (7) bewirkt ist und dem zweiten Detektor (7) ein Mikrolinsenarray (8) vorgeordnet ist;
oder
ii) sowohl dem ersten Detektor (4) als auch dem zweiten Detektor (7) ein Mikrolinsenarray (8) vorgeordnet ist.

2. Vorrichtung (1) nach Anspruch 1, **dadurch gekennzeichnet, dass** die erste räumliche Auflösung mindestens um einen Faktor 1,5 höher als die zweite räumliche Auflösung und die erste zeitliche Auflösung mindestens um einen Faktor 2 niedriger als die zweite zeitliche Auflösung ist.

3. Vorrichtung (1) nach einem der vorhergehenden Ansprüche, **dadurch gekennzeichnet, dass** das Mittel zur Aufteilung der Detektionsstrahlung (2) ein Strahlteiler, ein dichroitischer Strahlteiler oder ein schaltbarer Spiegel ist.

4. Mikroskop (11) mit einer Vorrichtung (1) nach einem der vorhergehenden Ansprüche.

5. Mikroskop (11) nach Anspruch 4, **dadurch gekennzeichnet, dass** in einem Beleuchtungsstrahlengang eine Lichtquelle (15), insbesondere eine Laserlichtquelle (15), und ein als Beleuchtungsobjektiv fungierendes Objektiv (18) vorhanden sind, wobei eine Weitfeldbeleuchtung erzeugt wird.

6. Mikroskop (11) nach Anspruch 4, **dadurch gekennzeichnet, dass** in einem Beleuchtungsstrahlengang eine Lichtquelle (15), ein als Beleuchtungsobjektiv fungierendes Objektiv (18) und eine Vorrichtung zur Erzeugung eines Lichtblatts (19) vorhanden sind, wobei das Lichtblatt (19) objektseitig vor dem Objektiv (18) in einem Probenraum (20) erzeugt wird.

7. Mikroskop (11) nach Anspruch 5 oder 6, **dadurch gekennzeichnet, dass** die Lichtquelle (15) zur Bereitstellung von gepulsten Beleuchtungslicht, insbesondere mit Pulsdauern im Bereich von Pikosekunden oder Femtosekunden, ausgebildet ist.

8. Mikroskop (11) nach einem der Ansprüche 6 oder 7, **dadurch gekennzeichnet, dass** die Vorrichtung zur Erzeugung eines Lichtblatts (19) eine Zylinderoptik oder eine Scanvorrichtung (17) ist, wobei ein durch Wirkung der Zylinderlinse geformter Beleuchtungslichtstrahl beziehungsweise mittels der Scanvorrichtung (17) abgelenkter Beleuchtungslichtstrahl der Lichtquelle (15) in einen Eintrittsort in einer Objektivpupille (EP) des Objektivs (18) gerichtet ist, der abseits der optischen Achse (oA) des Objektivs (18) liegt.

9. Mikroskop (11) nach einem der Ansprüche 4 bis 8, **dadurch gekennzeichnet, dass** im Beleuchtungsstrahlengang einstellbare optische Mittel (21) vorhanden sind, durch deren Wirkung eine Dicke des Lichtblatts (19) quer zu einer Lichtblattebene einstellbar ist.

10. Verfahren zur Erfassung von Bilddaten, bei dem

- ein Mikroskop (11) nach Anspruch 4 bereitgestellt wird;
- Detektionsstrahlung des Mikroskops (11) auf den ersten Detektionspfad (3) und den zweiten Detektionspfad (6) aufgeteilt wird;
- im ersten Detektionspfad (3) die Detektionsstrahlung mittels des ersten Detektors (4) erfasst wird,
- im zweiten Detektionspfad (6) die Detektionsstrahlung mittels des zweiten Detektors (7) erfasst wird; und
- die erfassten Bilddaten beider Detektoren (4, 7) zu einem dreidimensional aufgelösten resultierenden Bild verrechnet werden.

11. Verfahren nach Anspruch 10, **dadurch gekennzeichnet, dass** Bilddaten der höheren räumlichen Auflösung beziehungsweise Bilddaten der höheren zeitlichen Auflösung zur rechnerischen Erhöhung der räumlichen Auflösung und/oder der zeitlichen Auflösung der Bilddaten mit der geringeren räumlichen beziehungsweise der geringeren zeitlichen Auflösung verwendet werden.

12. Verfahren nach Anspruch 10 oder 11, **dadurch gekennzeichnet, dass** jeweils nur ein ausgewählter Anteil der Detektorelemente des zweiten Detektors (7) ausgelesen werden.

13. Verfahren nach einem der Ansprüche 10 bis 12, **dadurch gekennzeichnet, dass** die Detektionsstrahlung zeitlich abwechselnd entlang des ersten Detektionspfads (3) und des zweiten Detektionspfads (6) geleitet wird, wobei die Schaltzeitpunkte und die Zeitdauern der Umschaltung anhand der Wiederholfrequenz des ersten Detektors (4) festgelegt werden.

14. Verfahren nach einem der Ansprüche 10 bis 13, **dadurch gekennzeichnet, dass** die Verrechnung der Bilddaten und/oder die Kombination der Bilddaten oder der Bilder zu einem resultierenden Bild unter Anwendung maschinellen Lernens, insbesondere unter Anwendung von CNN (Convolutional Neural Networks) ausgeführt wird.

## Claims

1. Device (1) for capturing image data, comprising:

    - a detection beam path, along which detection radiation of at least one microscope (11) is guided or is guidable;
    - and a means for splitting the detection radiation (2) between a first detection path (3) and a second detection path (6);
    - a first detector (4) in the first detection path (3) and a second detector (7) in the second detection path (6), with a microlens array (5, 8) being disposed upstream of at least one of the detectors (4, 7);

        o the first detector (4) having a first spatial resolution in the form of an image resolution and the second detector (7) having a second spatial resolution and the first spatial resolution being higher than the second spatial resolution, the image resolution being determined by a spatial resolution of the captured image data, and
        o the first detector (4) having a first temporal resolution in the form of a detection rate and the second detector (7) having a second temporal resolution, the first temporal resolution being lower than the second temporal resolution, and the detection rate of the relevant detector (4, 7) being determined by the number of images recorded per second,

    **characterized in that**
    - an evaluation unit (10) is present for evaluating the captured image data from the first and second detectors (4, 7),

        - the evaluation unit (10) being configured such that the image data from both detectors (4, 7) are evaluated and a three-dimensionally resolved resultant image is created from these evaluated image data by virtue of the image data from both detectors (4, 7) being combined with one another by calculation;

    and either

        i) a pinhole (23) is present in an intermediate image plane and optically upstream of the first detector (4) in the first detection path (3) such that the detection radiation is captured confocally by means of the first detector (4), and this causes the first detector (4) to have a higher spatial resolution than the second detector (7),
        and a microlens array (8) is disposed upstream of the second detector (7);
        or
        ii) a microlens array (8) is disposed upstream of both the first detector (4) and the second detector (7).

2. Device (1) according to Claim 1, **characterized in that** the first spatial resolution is higher than the second spatial resolution by at least a factor of 1.5 and the first temporal resolution is lower than the second temporal resolution by at least a factor of 2.

3. Device (1) according to either of the preceding claims, **characterized in that** the means for splitting the detection radiation (2) is a beam splitter, a dichroic beam splitter or a switchable mirror.

4. Microscope (11) having a device (1) according to any of the preceding claims.

5. Microscope (11) according to Claim 4, **characterized in that** a light source (15), in particular a laser light source (15), and an objective (18) acting as an illumination objective are present in an illumination beam path, with a wide-field illumination being created.

6. Microscope (11) according to Claim 4, **characterized in that** a light source (15), an objective (18) acting as an illumination objective and a device for creating a light sheet (19) are present in an illumination beam path, the light sheet (19) being created upstream of the objective (18) object-side in a sample space (20).

7. Microscope (11) according to Claim 5 or 6, **characterized in that** the light source (15) is designed to provide pulsed illumination light, in particular with pulse durations of the order of picoseconds or femtoseconds.

8. Microscope (11) according to either of Claims 6 and 7, **characterized in that** the device for creating a light sheet (19) is a cylindrical optical unit or a scanning device (17), with an illumination light beam shaped by the effect of the cylindrical lens or an illumination light beam deflected by means of the scanning device (17), the illumination light beam coming from the light source (15) in each case, being directed at an entrance location in an objective pupil (EP) of the objective (18) that is located away from the optical axis (oA) of the objective (18).

9. Microscope (11) according to any of Claims 4 to 8, **characterized in that** adjustable optical means (21) are present in the illumination beam path and the effect thereof renders a thickness of the light sheet (19) across a light sheet plane adjustable.

10. Method for capturing image data, wherein

   - a microscope (11) according to Claim 4 is provided;
   - detection radiation of the microscope (11) is split between the first detection path (3) and the second detection path (6);
   - the detection radiation is captured by means of the first detector (4) in the first detection path (3),
   - the detection radiation is captured by means of the second detector (7) in the second detection path (6); and
   - the captured image data of both detectors (4, 7) are combined by calculation into a three-dimensionally resolved resultant image.

11. Method according to Claim 10, **characterized in that** image data with the higher spatial resolution or image data with the higher temporal resolution are used to increase the spatial resolution and/or the temporal resolution of the image data with the lower spatial or the lower temporal resolution by calculation.

12. Method according to Claim 10 or 11, **characterized in that** only a selected proportion of the detector elements of the second detector (7) are read in each case.

13. Method according to any of Claims 10 to 12, **characterized in that** the detection radiation is guided along the first detection path (3) and the second detection path (6) alternately in time, with the switching times and the durations of the switchover being defined on the basis of the repetition frequency of the first detector (4).

14. Method according to any of Claims 10 to 13, **characterized in that** the combination of the image data by calculation and/or the combination of the image data or of the images to form a resultant image is carried out using machine learning, in particular using CNNs (convolutional neural networks).


**Revendications**

1. Dispositif (1) d'acquisition de données d'image comprenant

   - un trajet de faisceau de détection le long duquel le rayonnement de détection d'au moins un microscope (11) est guidé ou peut être guidé ;
   - et un moyen de division du rayonnement de détection (2) en un premier trajet de détection (3) et un deuxième trajet de détection (6) ;
   - dans le premier trajet de détection (3), un premier détecteur (4) et dans le deuxième trajet de détection (6), un deuxième détecteur (7), au moins l'un des détecteurs (4, 7) étant précédé d'un réseau de microlentilles (5, 8) ;

o le premier détecteur (4) ayant une première résolution spatiale sous la forme d'une résolution d'image et le deuxième détecteur (7) ayant une deuxième résolution spatiale, et la première résolution spatiale étant supérieure à la deuxième résolution spatiale ; la résolution d'image étant déterminée par une résolution spatiale des données d'image acquises, et

o le premier détecteur (4) présentant une première résolution temporelle sous la forme d'un taux de détection et le deuxième détecteur (7) présentant une deuxième résolution temporelle, la première résolution temporelle étant inférieure à la deuxième résolution temporelle, et le taux de détection du détecteur (4, 7) concerné étant déterminé par le nombre d'images enregistrées par seconde,

**caractérisé en ce que**

- une unité d'évaluation (10) est présente pour évaluer les données d'image acquises des premier et deuxième détecteurs (4, 7),

-- l'unité d'évaluation (10) étant configurée de telle sorte que l'évaluation des données d'image des deux détecteurs (4, 7) soit effectuée et qu'une image résultante à résolution tridimensionnelle soit générée à partir de ces données d'image évaluées, en calculant ensemble les données d'image des deux détecteurs (4, 7) ; et soit

i) un trou d'épingle (23) est présent dans le premier trajet de détection (3) dans un plan image intermédiaire et est disposé optiquement en amont du premier détecteur (4), de telle sorte qu'une détection confocale du rayonnement de détection soit effectuée au moyen du premier détecteur (4) et que la résolution spatiale ainsi obtenue au moyen du premier détecteur (4) soit plus élevée qu'avec le deuxième détecteur (7) et qu'un réseau de microlentilles (8) soit disposé en amont du deuxième détecteur (7) ; soit

ii) un réseau de microlentilles (8) est disposé en amont à la fois du premier détecteur (4) et du deuxième détecteur (7).

2. Dispositif (1) selon la revendication 1, **caractérisé en ce que** la première résolution spatiale est supérieure à la deuxième résolution spatiale d'au moins un facteur 1,5 et **en ce que** la première résolution temporelle est inférieure à la deuxième résolution temporelle d'au moins un facteur 2.

3. Dispositif (1) selon l'une quelconque des revendications précédentes, **caractérisé en ce que** le moyen de division du rayonnement de détection (2) est un séparateur de faisceau, un séparateur de faisceau dichroïque ou un miroir commutable.

4. Microscope (11) comprenant un dispositif (1) selon l'une quelconque des revendications précédentes.

5. Microscope (11) selon la revendication 4, **caractérisé en ce qu'**une source de lumière (15), en particulier une source de lumière laser (15), et un objectif (18) fonctionnant en tant qu'objectif d'éclairage sont présents dans un trajet de faisceau d'éclairage, un éclairage à champ large étant ainsi généré.

6. Microscope (11) selon la revendication 4, **caractérisé en ce qu'**une source de lumière (15), un objectif (18) fonctionnant en tant qu'objectif d'éclairage et un dispositif destiné à générer une nappe de lumière (19) sont présents dans un trajet de faisceau d'éclairage, la nappe de lumière (19) étant générée côté objet devant l'objectif (18) dans un espace pour échantillons (20).

7. Microscope (11) selon la revendication 5 ou 6, **caractérisé en ce que** la source de lumière (15) est conçue pour fournir une lumière d'éclairage pulsée, en particulier avec des durées d'impulsion de l'ordre de la picoseconde ou de la femtoseconde.

8. Microscope (11) selon l'une quelconque des revendications 6 ou 7, **caractérisé en ce que** le dispositif destiné à générer une nappe de lumière (19) est un dispositif optique cylindrique ou un dispositif de balayage (17), un faisceau lumineux d'éclairage formé par l'action de la lentille cylindrique ou un faisceau lumineux d'éclairage dévié par le dispositif de balayage (17) de la source de lumière (15) étant dirigé vers un point d'entrée dans une pupille d'objectif (EP) de l'objectif (18), qui est situé à l'écart de l'axe optique (oA) de l'objectif (18).

9. Microscope (11) selon l'une quelconque des revendications 4 à 8, **caractérisé en ce que** des moyens optiques réglables (21) sont présents dans le trajet de faisceau d'éclairage, dont l'action permet de régler une épaisseur de la nappe de lumière (19) transversalement à un plan de la nappe de lumière.

10. Procédé d'acquisition de données d'image, dans lequel

   - un microscope (11) selon la revendication 4 est fourni ;
   - un rayonnement de détection du microscope (11) est divisé en le premier trajet de détection (3) et le deuxième trajet de détection (6) ;
   - dans le premier trajet de détection (3), le rayonnement de détection est détecté au moyen du premier détecteur (4),
   - dans le deuxième trajet de détection (6), le rayonnement de détection est détecté au moyen du deuxième détecteur (7) ; et
   - les données d'image acquises des deux détecteurs (4, 7) sont calculées pour obtenir une image résultante à résolution tridimensionnelle.

11. Procédé selon la revendication 10, **caractérisé en ce que** des données d'image ayant la résolution spatiale supérieure ou des données d'image ayant la résolution temporelle supérieure sont utilisées pour augmenter par calcul la résolution spatiale et/ou la résolution temporelle des données d'image ayant respectivement la résolution spatiale inférieure ou la résolution temporelle inférieure.

12. Procédé selon la revendication 10 ou 11, **caractérisé en ce que** seule une partie sélectionnée des éléments de détection du deuxième détecteur (7) est respectivement lue.

13. Procédé selon l'une quelconque des revendications 10 à 12, **caractérisé en ce que** le rayonnement de détection est dirigé alternativement dans le temps le long du premier trajet de détection (3) et du deuxième trajet de détection (6), les instants de commutation et les durées de commutation étant déterminés à partir de la fréquence de répétition du premier détecteur (4).

14. Procédé selon l'une quelconque des revendications 10 à 13, **caractérisé en ce que** le calcul des données d'image et/ou la combinaison des données d'image ou des images en une image résultante est effectué(e) par utilisation d'un apprentissage automatique, en particulier par utilisation de CNN (Convolutional Neural Networks) .

Fig. 1

EP 3 992 688 B1

Fig. 2

Fig. 3

EP 3 992 688 B1

Fig. 4

Fig. 5

EP 3 992 688 B1

```
                        ┌──────────────────────────────┐
                        │      Detektionsstrahlung      │
                        └──────────────────────────────┘
                         ⇓                            ⇓
        ┌──────────────────────────┐      ┌──────────────────────────┐
        │  erster Detektionspfad 3 │      │ zweiter Detektionspfad 6 │
        └──────────────────────────┘      └──────────────────────────┘
                    ⇓                                  ⇓
┌──────────────────────────────────┐  ┌──────────────────────────────────┐
│     Erfassen von Bilddaten       │  │     Erfassen von Bilddaten       │
│       mittels Slowcam            │  │       mittels Fastcam            │
│  (höhere räumliche Auflösung,    │  │  (geringere räumliche Auflösung, │
│   geringere zeitliche Auflösung) │  │   höhere zeitliche Auflösung)    │
└──────────────────────────────────┘  └──────────────────────────────────┘
                    ⇓                                  ⇓
┌──────────────────────────────────┐  ┌──────────────────────────────────┐
│  Errechnen eines dreidimensional │  │  Errechnen eines dreidimensional │
│       aufgelösten Bildes         │  │       aufgelösten Bildes         │
└──────────────────────────────────┘  └──────────────────────────────────┘
                 ⇘                            ⇙
              ┌──────────────────────────────────────────┐
              │ Kombinieren zu einem resultierenden Bild; │
              │  optional unter Verwendung von CNN        │
              └──────────────────────────────────────────┘
```

Fig. 6

```
                        ┌─────────────────────────┐
                        │   Detektionsstrahlung   │
                        └─────────────────────────┘
                          ⬋                     ⬊
        ┌──────────────────────┐        ┌──────────────────────┐
        │ erster Detektionspfad 3│      │ zweiter Detektionspfad 6│
        └──────────────────────┘        └──────────────────────┘
                    ⬇                              ⬇
        ┌──────────────────────┐        ┌──────────────────────┐
        │   Erfassen von Bilddaten │    │   Erfassen von Bilddaten │
        │   mittels der Slowcam   │     │   mittels der Fastcam   │
        │ (höhere räumliche Auflösung,│ │ (geringere räumliche Auflösung,│
        │ geringere zeitliche Auflösung)│ │ höhere zeitliche Auflösung)│
        └──────────────────────┘        └──────────────────────┘
                     ⬊                          ⬋
             ┌───────────────────────────────────────┐
             │ Kombination zu einem resultierenden Bild;│
             │ optional unter Verwendung von CNN        │
             └───────────────────────────────────────┘
```

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CONG, L. et al.** *eLife,* 2017, vol. 6, e28158
- **B. BROXTON et al.** *OPTICS EXPRESS,* 2013, vol. 21, 25418-39
- **WEISENBURGER, S. ; VAZIRI, A.** *Annual Review of Neuroscience,* 2018, vol. 41, 431-452
- **SCROFANI, G. et al.** *BIOMEDICAL OPTICS EXPRESS,* 2018, vol. 9, 335-346
- **B. WANG, H. et al.** *Nature Methods,* 2018, vol. 16, 103-110
- **ZHANG, H. et al.** *Sensors,* 2019, vol. 19, 3234